# EUROPÄISCHE PATENTSCHRIFT

(11) **EP 3 076 041 B1**
(45) Veröffentlichungstag und Bekanntmachung des Hinweises auf die Patenterteilung: **31.01.2018**
(21) Anmeldenummer: 15161867.5
(22) Anmeldetag: 31.03.2015
(51) Int. Cl.: F16D 55/2265, B61H 5/00, F16D 65/18, F16D 121/12, F16D 125/40, F16D 121/16

(54) **BREMSANTRIEB**
BRAKE DRIVE
SYSTÈME D'ENTRAÎNEMENT DE FREIN

(43) Veröffentlichungstag der Anmeldung: 05.10.2016
(73) Patentinhaber: Special Constructor Byuro "PARUS", 456200 Zlatoust (RU)
(72) Erfinder: KARMANOV, Vladimir Sergeevich, 456200 Zlatoust-Chelyabinsk (RU); VORONA, Vladimir Victorovich, 456200 Zlatoust-Chelyabinsk (RU)
(74) Vertreter: Jeck, Anton

(56) Entgegenhaltungen:
- WO-A1-01/21973
- DE-A1- 3 724 201
- DE-C1- 19 600 486
- US-A1- 2009 054 192

## Beschreibung

Die Erfindung betrifft einen Bremsantrieb nach dem Oberbegriff des Anspruchs 1.

Die Erfindung ist im Fahrzeugbau einsetzbar und kann in Bremsanlagen von Elektrofahrzeugen Anwendung finden.

Aus dem Stand der Technik ist ein Bremsantrieb HYS 35x der Fa. Hanning & Kahl (Deutschland) bekannt (www.hanning-kahl.com). Er enthält ein Gehäuse mit darin gegenüberliegend eingebauten Bremsbacken, einer beweglichen und einer festen. Das Gehäuse enthält zwei Führungen, deren Achsen mit der Bewegungsrichtung der beweglichen Bremsbacke gleichläufig sind. Ein Stößel stützt die Stirnfläche der beweglichen Bremsbacke ab. Der Stößel ist dabei mit einem Kolben eines Hydrozylinders verbunden, dessen Achse gleichläufig mit den Führungen ist. Im Gehäuse ist ein Federpaket koaxial mit dem Stößel eingebaut. Eine Stirnfläche des Federpakets stützt das Gehäuse und eine andere Stirnfläche den Kolben des Hydrozylinders ab. Ist kein Druck im Hydrozylinder vorhanden, verschiebt das Federpaket die bewegliche Bremsbacke mittels des Stößels. Beim Kontakt zwischen der beweglichen Bremsbacke und einer Bremsscheibe lässt die Anpresskraft das gesamte Gehäuse über die Führungen fahren, welche an einer externen Einrichtung starr befestigt sind. Die Bewegung erfolgt, bis die feste Bremsbacke die Bremsscheibe berührt. Danach wird die Bremsscheibe abgebremst.

Der bekannte Antrieb hat den Nachteil, dass er eine kostspielige Fern-Wasserkraftanlage mit zusätzlichen Handlüftungshebeln aufweist.

Durch DE 37 24 201 A1 ist eine elektromotorische Bremsbetätigungsvorrichtung für eine einen Federspeicher, ein Bremsgestänge sowie Bremsbacken aufweisende Bremsmechanik eines Schienenfahrzeugs bekannt. Die Bremsbetätigungsvorrichtung ist mit einem Elektro-Aufzugsmotor für den bei offener Bremse gespannten und sich beim Bremshub entspannenden Federspeicher ausgestattet. Die von einer Federspeicher-Kolbenstange über ein Kolbenstangen-Auge übertragene Federspeicher-Kraft beaufschlagt die Bremsbacken im Schließsinne der Bremse mittelbar über das Bremsgestänge. Die Welle des Elektro-Aufzugsmotors ist mit einer Gewindespindel eines Gewindetriebs drehverbunden. Die drehbare Gewindespindel ist gegen Axialbewegung gesichert und trägt eine Kugelumlaufmutter, welche kraft- und formschlüssig in einem Federteller untergebracht ist, der sich in einer schubzugrohrartigen Kolbenstange fortsetzt, deren endseitiges Kolbenstangenauge mit einem Bremsgestänge bewegungsverbunden ist, dessen Bremsbacken Bremsbeläge tragen. Die Bremsbacken mit Bremsbelägen wirken auf eine Bremsscheibe auf einer Radachse. Die Kolbenstange wird durch eine Speicherfeder aus dem Gehäuse nach außen gedrückt. Der Elektro-Aufzugsmotor hingegen wird über eine Einspeisung mit elektrischer Leistung in Spannrichtung des Federspeichers bzw. Federspeicherkolbens beaufschlagt und drückt hierbei die Speicherfeder über den Gewindetrieb zusammen und zieht dabei die Kolbenstange in das Gehäuse zurück. Dem Bremsgestänge ist zur Abkupplung von dem im Bremszustand befindlichen Federspeicher eine Lösevorrichtung zugeordnet. Zur Bildung der Lösevorrichtung ist der dem Bremsgestänge benachbarte Kolbenstangenbereich in zwei entgegen der Bremsbewegungsrichtung des Bremsgestänges relativ zueinander translatorisch bewegliche Bauteile, Primärteil und Sekundärteil, unterteilt. Primärteil und Sekundärteil bilden mindestens ein Kupplungsflächen-Paar, nämlich eine primäre und eine sekundäre Kupplungsfläche. Die primäre und die sekundäre Kupplungsfläche sind mittels eines gemeinsamen Kupplungskörpers formschlüssig bewegungskuppelbar. Der Kupplungskörper steht mit einem beweglichen Sperrschieber in Wirkverbindung. Der Sperrschieber legt in seiner Sperrstellung den beide korrespondierende Kupplungsflächen bewegungskuppelnden Kupplungskörper in seiner Kupplungsstellung fest. In seiner Freigabestellung öffnet der Sperrschieber dem Kupplungskörper einen Frei- bzw. Ausweichraum.

Durch US 2009/0054192 A1 ist eine Vorrichtung bekannt, die eine Auflage aufweist, die auf starr befestigten Führungen eingebaut wird, so dass eine Hin- und Herbewegung möglich ist. In der Auflage sind eine bewegliche und eine feste Bremsbacke auf den befestigten Führungen angeordnet. Die Schraube des Muttertriebwerks ist mit der beweglichen Bremsbacke starr verbunden. Die Mutter des Muttertriebwerks ist mittels eines Getriebes mit einem Motor verbunden. Das Muttertriebwerk mit dem Getriebe und der Motor sind im Gehäuse eingebaut, das auf der Auflage starr befestigt ist.

Durch DE 196 00 486 C1 ist eine Bremse für Schienenfahrzeuge mit einer mitdrehbar auf einer Welle des Motors oder des Getriebes gehaltenen Bremsscheibe bekannt. Die Bremsscheibe ist in einem Gehäuseabschnitt des Antriebsgehäuses untergebracht. Die Bremse weist einen am Umfang der Bremsscheibe angeordneten, in einer Öffnung in der Umfangswand des Gehäuseabschnitts gelagerten Schwimmsattel mit einander beidseits der Bremsscheibe gegenüberliegenden Bremsbelägen auf.

Durch WO 01/21973 A1 ist eine Zuspannvorrichtung für eine Scheibenbremse eines Schienenfahrzeugs mit einem Bremskrafterzeuger zum Zuspannen und/oder Lösen der Fahrzeugbremse und einem Bremskraftumsetzer zur Umsetzung der vom Bremskrafterzeuger abgegebenen Energie in eine Bremszuspannbewegung bekannt. Die vom Bremskrafterzeuger bei einer Bremsung aufzubringende Kraft zur Erzeugung einer definierten Bremszuspannkraft, die grösser als Null und kleiner als die maximale Bremskraft ist, beträgt Null.

Als Prototyp gilt der bekannte Bremsantrieb GBMVI der Fa. RACO (Deutschland) (www.raco.de). Dieser Bremsantrieb weist ein Gehäuse mit einer drehbar gelagerten Schraube eines Kugelgewindetriebs auf. Die Schraube ist mittels eines Getriebes mit einem Motor verbunden. An einer Welle des Motors ist eine Magnetbremse aufgebaut. Am Austrittsende der Schraube ist eine Mutter montiert, die mit einem Schlitten starr verbunden ist. Der Schlitten ist im Gehäuse gelagert, so dass eine axiale Hin- und Herbewegung möglich ist. Im Gehäuse ist ein Federpaket koaxial mit der Schraube eingebaut. Eine Stirnfläche des Federpakets stützt sich auf dem Gehäuse ab, und die andere Stirnfläche stützt sich auf der Stirnfläche des Schlittens ab. Das Austrittsende des Schlittens hat ein Befestigungsauge. Ein anderes Auge ist am Gehäuse starr befestigt.

Wird eine Spannung angelegt, so schaltet der Elektromagnet im starr befestigten Antrieb ab, und der Motor dreht die Schraube des Kugelgewindetriebs mittels des Getriebes. Beim Drehen der Schraube bewegen sich die Mutter und der Schlitten axial und drücken das Federpaket zusammen. Wird der erforderliche Druckgrad (Abstand zwischen dem Befestigungsauge des Gehäuses und dem Schlitten) erreicht, so schaltet der Elektromagnet ein, der die Schraube in einer festen Lage festhält. An den Befestigungsaugen des Gehäuses und des Schlittens ist ein Hebel-BackenSystem befestigt. Beim Abschalten des Elektromagneten stößt das Federpaket den Schlitten mit der Mutter hinaus. Der Schlitten und die Mutter bewegen sich axial beim Drehen der Schraube. Der Abstand zwischen den Augen wird größer. Dieser Antrieb kann in Bremssystemen benutzt werden, wenn ein zusätzliches Hebel-BackenSystem vorhanden ist. Dieses System ermöglicht es, die Bewegungen des Befestigungsauges des Antriebs in Bewegungen der Bremsbacken umzusetzen. Dabei muss die Vergrößerung des Abstands zwischen den Augen dazu führen, dass der Abstand zwischen den Bremsbacken kleiner wird.

Der Antrieb weist die Mängel auf, dass er mit einem baumäßig komplizierten Hebel-Backen-System ausgestattet werden muss. Dieses System muss bei einem starr befestigten Antrieb sicherstellen, dass die Bremsbacken an die Bremsscheibe angedrückt werden, dass ihr Verschleiß gleichmäßig ist und dass eine Möglichkeit einer Entbremsung bei fehlender Speisespannung gewährleistet ist.

Ein weiterer Mangel des Antriebs ist das Vorhandensein von Elektromagneten, um die Federn im zusammengedrückten Zustand festzuhalten. Das vermindert die Zuverlässigkeit der Einrichtung.

Es ist Aufgabe der Erfindung, die Konstruktion des Antriebs dadurch zu vereinfachen, dass ein Backenbremssystem im Gehäuse des Antriebs selbst angeordnet ist und dass seine Betriebsfunktionalitäten dank einem vorhandenen System einer manuellen Entbremsung erweitert werden können.

Die gestellte Aufgabe wird durch die Merkmale des Anspruchs 1 gelöst.

Dies ist dadurch erreicht, dass der erfindungsgemäße Bremsantrieb ein Gehäuse mit einer darin drehbar angeordneten Schraube aufweist. Die Schraube ist mittels eines Getriebes mit einem Motor verbunden. Der Antrieb weist auch eine an der Schraube montierte Mutter mit einem starr befestigten Schlitten und ein Federpaket auf, welches zwischen den Stirnflächen der Mutter und des Gehäuses eingebaut ist. Gemäß der Erfindung sind zwei Bremsbacken im Gehäuse eingebaut. Dabei ist eine der Bremsbacken im Gehäuse fest eingebaut, und die ihr gegenüber liegende zweite Backe ist im Gehäuse verstellbar angeordnet und steht im Kontakt mit dem Schlitten. Das Gehäuse selbst ist dabei in Führungen beweglich montiert, deren Achsen mit der Bewegungsrichtung der beweglichen Bremsbacke gleichläufig sind. Bei dem Motor handelt es sich um einen Ventil- oder einen Schrittmotor.

Vorteilhafte Ausgestaltungen des Bremsantriebs sind den Unteransprüchen zu entnehmen.

Die technische Aufgabe kann auch dadurch gelöst werden, dass im Gehäuse des erfindungsgemäßen Bremsantriebs Plunger eingebaut sind, deren Achsen mit der Mutterachse gleichläufig sind und deren Anzahl dafür ausreicht, eine Kraft zu erzeugen, die die maximale Federpaketkraft überschreitet.

Ein Austrittsende einer Motorwelle im erfindungsgemäßen Bremsantrieb ist mit einem Halszapfen versehen, um einen Maulschlüssel ansetzen zu können.

Ein kennzeichnendes Merkmal der beanspruchten technischen Lösung ist, dass das Gehäuse des Antriebs geradlinig verfahrbar ausgebildet ist. Im Antrieb sind eine feste und eine bewegliche Bremsbacke gegenüberliegend angeordnet. Dabei sind die Bewegungsrichtungen des Gehäuses und der Bremsbacke gleichläufig. Das ermöglicht es, bei einer Krafteinwirkung auf die bewegliche Bremsbacke eine Verschiebung des Gehäuses und ein Anpressen sowohl der beweglichen als auch der festen Bremsbacke gegen die Bremsscheibe sicherzustellen. Dadurch erübrigt sich auch ein zusätzliches Hebel-Backensystem.

Ein Ventil- oder Schrittmotor ermöglicht es, mit Hilfe eines Getriebes und einer Kugelgewindespindel nicht nur das Federpaket um eine gewünschte Größe zusammenzupressen, sondern es mittels einer elektronischen Motorsteuerung auch im zusammengepressten Zustand festzuhalten.

Die gleichläufig mit der Mutterachse angeordneten Plunger ermöglichen es, das Federpaket zusammenzupressen, wenn ein Flüssigkeitsdruck auf ihre Stirnflächen einwirkt. Bei dieser Einwirkung kann es sich z. B. um eine Handpumpe handeln, wenn kein elektrischer Strom vorhanden ist. Die Plunger ermöglichen es z. B., die Bremse eines Straßenbahnwagens zu lösen, um ihn abzuschleppen. Das System stellt eine Lösung der Bremse unabhängig von der Anbaustelle des Bremsantriebs im Wagendrehgestell sicher.

Der an der Motorwelle ausgebildete Halszapfen für einen Maulschlüssel ermöglicht es, das Federpaket bei der Betätigung des Halszapfens mit einem Maulschlüssel mittels des Getriebes und des Kugelgewindetriebs zusammenzupressen und bei Stromausfall (im stromlosen Zustand) die Bremse des Straßenbahnwagens zu lösen, wenn der Maulschlüssel sicher befestigt werden kann.

Beim Vergleich des beanspruchten Bremsantriebs mit bekannten Antrieben kann festgestellt werden, dass ein neuer technischer Effekt erreicht wird. Bei diesem technischen Effekt handelt es sich um die Möglichkeit, die Bremse zu lösen, ohne dass zusätzliche Bremsbackensysteme angewendet werden, wenn ein manuelles Lösen der Bremse im Notbetrieb sichergestellt werden muss.

Die erfindungsgemäße technische Lösung kann unter Anwendung von bekannten technischen Mitteln in einem beliebigen Maschinenbaubetrieb oder in einer beliebigen Werkstatt durchgeführt werden. Folglich ist die Erfindung im Sinne der Voraussetzung "Gewerbliche Anwendbarkeit" patentfähig.

Das Wesen der Erfindung wird anhand der Zeichnungen an einem Ausführungsbeispiel näher erläutert. Es zeigen:
- Fig. 1: die axonometrische Ansicht eines erfindungsgemäßen elektromechanischen Antriebs im Detail und
- Fig. 2: eine Bremsanlage mit einem Antrieb.

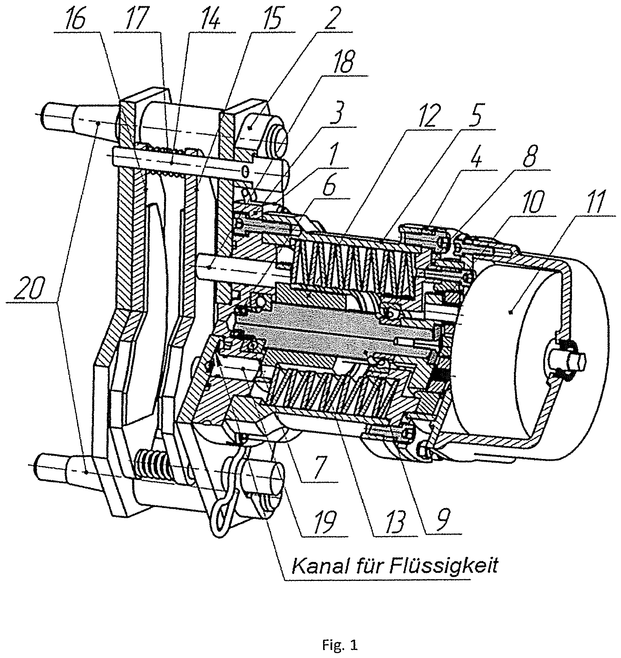

Der Bremsantrieb (Fig.1) enthält ein Gehäuse 1, welches aus einer Auflage (einem Support) 2 mit befestigten Flanschen 3, 4 und einem Topf 5 besteht. Eine Schraube 9 eines Kugelgewindetriebs ist koaxial mit der Topfachse in den im Gehäuse 1 liegenden Lagern 6, 7, 8 drehbar gelagert. Die Schraube 9 ist mittels eines Getriebes 10 mit einem Motor 11 verbunden. An der Schraube 9 ist eine Mutter 12 befestigt. Auf die Stirnfläche der Mutter 12 stützt sich ein Federpaket 13 ab. Die andere Stirnfläche des Federpakets 13 stützt sich an der Stirnfläche vom Flansch 4 des Gehäuses 1 ab. Die Auflage 2 des Gehäuses 1 weist zwei Achsenführungen 14 auf, welche gleichläufig mit der Achse der Schraube 9 sind. Führungen 14 nehmen eine bewegliche Bremsbacke 15 und eine ihr gegenüber liegende feste Bremsbacke 16 auf. Zwischen den Bremsbacken 15 und 16 sind Federn 17 in Führungen 14 montiert. Ein Schlitten 18 ist in die Mutter 12 starr eingebaut. Die Austrittsenden des Schlittens 18 stützen sich an der beweglichen Bremsbacke 15 ab. Im Flansch 3 des Gehäuses 1 sind Plunger 19 gleichläufig mit der Achse der Schraube 9 eingebaut. Eine Stirnfläche der Plunger 19 berührt die Auflage 2, und die andere Stirnfläche steht im Kontakt mit der Stirnfläche der Mutter 12. Um eine Verschiebung der ganzen Vorrichtung sicherzustellen, weist das Gehäuse 1 zwei Führungen 20 auf. Das Ende einer Welle des Motors 11 ist mit einem Halszapfen versehen, um einen Maulschlüssel aufzunehmen.

Die Funktionsweise der Einrichtung ist wie folgt:

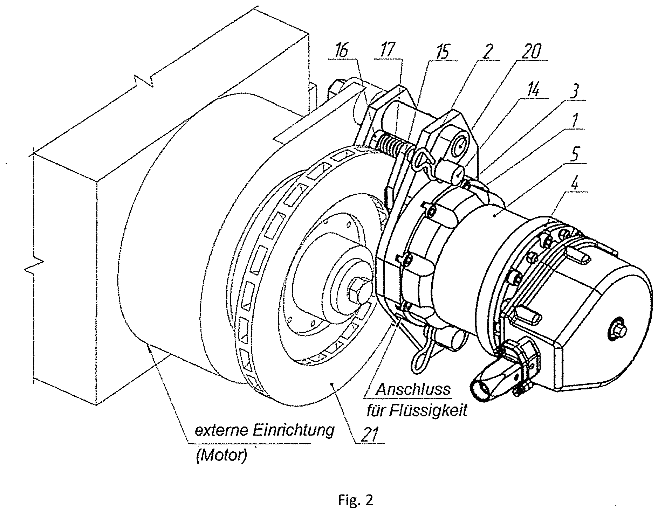

Wird ein Speisestrom angelegt, so lässt der Motor 11 die Schraube 9 des Kugelgewindetriebs mittels des Getriebes 10 drehen. Die Mutter 12 des Kugelgewindetriebs wird zusammen mit einem Schlitten 18 entlang der Achse der Schraube 9 verstellt und drückt das Federpaket 13 zusammen. Die Verstellung erfolgt, bis die bewegliche Bremsbacke 15 die Stirnfläche der Auflage 2 kontaktiert. Das Federpaket 13 kann in seiner Sollstellung durch den Motor 11 selbst festgehalten werden. Beim Motor 11 kann es sich dabei um einen Ventil- oder einen Schrittmotor handeln. Das Gehäuse 1 des Bremsantriebs (Fig. 2) wird auf ein Gehäuse einer externen Einrichtung (Motor oder Drehgestell) mittels Führungen 19 aufgesetzt, so dass eine Bremsscheibe 21 zwischen den Bremsbacken 15 und 16 liegt, so dass die Achsen von Führungen 19 selbst mit der Achse der Bremsscheibe 21 gleichläufig sind. Bei Abschaltung des Speisestroms wird der Motor 11 entlastet, und das Federpaket 13 stößt die Mutter 12 mit dem Schlitten 18 hinaus. Dadurch wird die bewegliche Bremsbacke 15 gegen die Bremsscheibe 21 gepresst. Die Anpresskraft lässt das Gehäuse 1 des Bremsantriebs in axialer Richtung der Bremsscheibe 21 verfahren, bis die feste Bremsbacke 16 in Kontakt mit der Bremsscheibe 21 gebracht ist. Somit werden die Spiele zwischen den Bremsbacken 15 und 16 und der Bremsscheibe 21 vermieden, und die Bremsscheibe 21 wird abgebremst. Um die Bremse zu lösen, muss ein Befehl an den Motor 11 geschickt werden. Dadurch wird der Motor 11 mittels des Getriebes 10 und der Schraube 9 in Drehbewegung versetzt. Damit ist es möglich, die Mutter 12 mit dem Schlitten 18 axial zu verschieben und ein Spiel zwischen den Bremsbacken 15 und 16 und der Bremsscheibe 21 zu erzeugen.

Liegt keine Speisespannung an, dann kann die Bremse manuell gelöst werden. Dafür muss eine Arbeitsflüssigkeit mittels einer Handpumpe in die Innenräume von Flansch 3 und Auflage 2 gepumpt werden. Der Flüssigkeitsdruck wird mittels der Plunger 19 eine Krafteinwirkung auf die Mutter 12 erzeugen. Die Verschiebung der Mutter 12 verursacht eine Ausbildung von Spielen zwischen den Bremsbacken 15 und 16 und der Bremsscheibe 21. Der Flüssigkeitsdruck im System wird mittels Pumpenventilen aufrechterhalten und abgebaut.

Bei einer fehlenden Speisespannung kann die Bremse des Antriebs gelöst werden, indem die Welle des Motors mit einem Maulschlüssel gedreht wird. Nachdem die Bremse gelöst ist, muss der Maulschlüssel am Gehäuse der externen Einrichtung oder des Antriebs selbst festgestellt werden.

Weiterhin ist das Federpaket mit Hilfe des Getriebes und einer Kugelgewindespindel um eine gewünschte Größe zusammengepresst und mittels einer elektronischen Motorsteuerung auch im zusammengepressten Zustand gehalten.

Ein Flüssigkeitsdruck presst auf die Stirnfläche der gleichläufig mit der Mutterachse angeordneten Plunger (19) das Federpaket (13) zusammen und löst die Bremse.

Das Lösen der Bremse ist unabhängig von der Anbaustelle des Bremsantriebs an dem Wagengestell gesichert.

Der Flüssigkeitsdruck ist im System mittels Pumpenventilen aufrechterhalten und abbaubar.

## Patentansprüche

1. Bremsantrieb mit einem Gehäuse (1), in dem eine Schraube (9) drehbar angeordnet ist, die mit einem Motor (11) mittels eines Getriebes (10) verbunden ist, mit einer an der Schraube (9) montierten Mutter (12) mit einem starr befestigten Schlitten (18) und mit einem Federpaket (13), welches zwischen den Stirnflächen der Mutter (12) und des Gehäuses (1) eingebaut ist,
**dadurch gekennzeichnet,**
**dass** im Gehäuse (1) zwei Bremsbacken (15, 16) eingebaut sind, wobei eine der Bremsbacken (16) im Gehäuse (1) fest eingebaut ist und die zweite ihr gegenüber liegende Backe (15) im Gehäuse (1) verstellbar angeordnet ist und in Kontakt mit dem Schlitten (18) steht,
**dass** das Gehäuse (1) selbst in Führungen beweglich angeordnet ist, deren Achsen mit der Bewegungsrichtung der beweglichen Bremsbacke (15) gleichläufig sind, und
**dass** der Motor (11) als ein Ventil- oder ein Schrittmotor ausgebildet ist.

2. Bremsantrieb nach Anspruch 1,
**dadurch gekennzeichnet,**
**dass** im Gehäuse (1) Plunger (19) eingebaut sind, deren Achsen mit der Achse der Mutter (12) gleichläufig sind, und
**dass** die Anzahl der Plunger (19) dafür ausreicht, eine erforderliche Kraft zu erzeugen, die die maximale Federpaketkraft (13) überschreitet.

3. Bremsantrieb nach Anspruch 1,
**dadurch gekennzeichnet,**
**dass** ein Austrittsende einer Welle des Motors (11) mit einem Halszapfen versehen ist, um einen Maulschlüssel anzusetzen.

4. Bremsantrieb nach Anspruch 1,
**dadurch gekennzeichnet,**
**dass** das Federpaket (13) mit Hilfe des Getriebes (10) und einer Kugelgewindespindel um eine gewünschte Größe zusammengepresst und mittels einer elektronischen Motorsteuerung auch im zusammengepressten Zustand gehalten ist.

5. Bremsantrieb nach Anspruch 1,
**dadurch gekennzeichnet,**
**dass** ein Flüssigkeitsdruck auf die Stirnfläche der gleichläufig mit der Mutterachse angeordneten Plunger (19) das Federpaket (13) zusammenpresst und die Bremse löst.

6. Bremsantrieb nach Anspruch 1,
**dadurch gekennzeichnet,**
**dass** das Lösen der Bremse unabhängig von der Anbaustelle des Bremsantriebs an dem Wagengestell gesichert ist.

7. Bremsantrieb nach Anspruch 5,
**dadurch gekennzeichnet,**
**dass** der Flüssigkeitsdruck im System mittels Pumpenventilen aufrecht erhalten und abbaubar ist.

## Claims

1. Brake drive, consisting of housing (1), within which a propeller (9) is installed for rotation, connected by a gear (10) to the motor (11), nut (12) installed on propeller (9) with rigidly fastened thrust rods (18) and a pack of springs (13), installed between the ends of the nut (12) and housing (1), differing by having two brake pads (15, 16) installed in the housing (1), and one of the brake pads (16) is immobile within housing (1), and the other, opposite brake pad (15) within housing (1) with an ability to move and contacts thrust rods (18), while the housing (1) itself is installed on guides with moving ability, whose axis are parallel to the movement direction of the mobile brake pad (15), and motor (11) can be designed as a step motor or brushless motor.

2. Brake drive according to claim 1, differing by having plungers (19) installed within housing (1), whose axis are parallel to nut (12) axis, and the quantity of plungers (19) is sufficient to create a force that exceeds the maximum force of the pack of springs (13).

3. Brake drive according to claim 1, differing by having an outgoing motor shaft end (11) equipped with a pin to place a wrench.

4. Brake drive according to claim 1, differing by having the pack of springs (13) compressed by the gear (10) and ball and screw unit to the required distance and keeps them in the compressed state by an electronic control of the motor.

5. Brake drive according to claim 1, differing by having the pack of springs (13) compressed by pressure of a liquid on their ends by plungers (19), installed parallel to nut axis, ensuring brake release.

6. Brake drive according to claim 1, differing by having the brake release ensured independent from the brake drive on the cart.

7. Brake drive according to claim 5, differing by maintaining and discharging pressure of a liquid in the system by a pump valve.

## Revendications

1. Dispositif d'entraînement du frein muni d'un boîtier (1) où une vis (9) rotative est disposée reliée à un moteur (11) par le moyen d'un engrenage (10) incorporé à une mère (12) objet du montage d'une vis (9) à coulisseau fixé rigidement (18) et avec un paquet de ressorts (13) intégré entre la face frontale de la mère (12) et le boîtier (1)
Est caractérisé de sorte que
Deux patins de freins (15,16) sont intégrés dans le boîtier (1) dont l'un des patins de freins (16) est intégré fermement dans le boîtier (1) tandis que le deuxième patin de freins (15) opposé est disposé d'une manière déplaçable dans le boîtier (1) et est en contact avec le coulisseau (18),
Que le boîtier (1) est disposé lui-même en guidages d'une manière mobile dont les axes sont co-courants avec les directions de déplacement du patin de freins déplaçable (15) et que le moteur (11) est formé en moteur de soupape et de moteur pas à pas.

2. Dispositif d'entraînement du frein selon la revendication 1
Est caractérisé de sorte qu'
Un piston plongeur (19) est intégré dans le boîtier (1) dont les axes sont co-courants avec l'axe de la mère (12) et que le nombre des pistons plongeurs (19) est suffisant pour produire la force nécessaire qui dépasse la force du paquet de ressorts (13).

3. Dispositif d'entraînement du frein selon la revendication 1
Est caractérisé de sorte qu'
Une extrémité de sortie d'une vague du moteur (11) est munie d'un cou mortaise pour mettre en place une clé ouverte.

4. Dispositif d'entraînement du frein selon la revendication 1
Est caractérisé de sorte que
Le paquet de ressorts (13) à l'aide du boîtier (10) et d'une vis à billes est compressé selon la taille voulue et par le biais d'une commande de moteur électronique et maintenue même en état de compression.

5. Dispositif d'entraînement du frein selon la revendication 1
Est caractérisé de sorte qu'
Une pression du liquide donne suite à la compression du paquet de ressorts (13) sur la face frontale du piston plongeur (19) disposé en co-courant avec l'axe de la mère déclenchant ainsi le frein.

6. Dispositif d'entraînement du frein selon la revendication 1
Est caractérisé de sorte que
Le déclenchement du frein est assuré indépendamment de l'emplacement du dispositif d'entraînement du frein du relevage.

7. Dispositif d'entraînement du frein selon la revendication 5
Est caractérisé de sorte que
La pression du liquide au sein du système est maintenue ou le cas échéant dégradable par le biais de la soupape de pompe.
